# EUROPÄISCHE PATENTSCHRIFT

(11) **EP 1 710 484 B1**
(45) Veröffentlichungstag und Bekanntmachung des Hinweises auf die Patenterteilung: **17.06.2009**
(21) Anmeldenummer: 05007429.3
(22) Anmeldetag: 05.04.2005
(51) Int. Cl.: F16L 53/00, H05B 3/58

(54) **Elektrische Heizvorrichtung zum Beheizen eines Mediums in einem Schlauch**
Electrical heater for a fluid in a flexible hose
Dispositif de chauffage électrique d'un fluide dans un tuyau souple

(43) Veröffentlichungstag der Anmeldung: 11.10.2006
(73) Patentinhaber: DBK David + Baader GmbH, 76870 Kandel (DE)
(72) Erfinder: Gschwind, Thomas, 67098 Bad Dürkheim (DE)
(74) Vertreter: Polte, Willi

(56) Entgegenhaltungen:
- EP-A- 0 881 860
- WO-A-03/021087
- GB-A- 990 187
- US-A- 5 359 179

## Beschreibung

Die vorliegende Erfindung bezieht sich auf eine elektrische Heizvorrichtung zum Beheizen eines Mediums in einem Schlauch. Eine derartige elektrische Heizvorrichtung weist mindestens ein Heizelement, das mittels elektrischer Anschlüsse elektrisch kontaktierbar ist, und ein Anschlusselement zum Anschließen des Schlauchs an das Heizelement auf. Die Erfindung bezieht sich weiterhin auf einen beheizbaren Schlauch, der eine solche elektrische Heizvorrichtung aufweist, und ein Verfahren zum Herstellen einer derartigen elektrischen Heizvorrichtung und eines derartigen beheizbaren Schlauchs.

Aus der US 4,937,435 ist ein flexibles elektrisches Heizelement mit einer Vielzahl von PTC-Thermistoren bekannt. Die PTC-Thermistoren sind zwischen flexiblen flachen Leiterfolien angeordnet und ein flexibler dielektrischer Isolator nimmt die einzelnen PTC-Elemente auf. Das flexible Heizelement kann außen um ein Rohr oder ein Gefäß gelegt werden, um dieses zu beheizen.

Ein solches flexibles Heizelement kann aber nur zum Beheizen von Rohren mit relativ großem Durchmesser verwendet werden, da es einen vergleichsweise großen Biegeradius aufweist. Ein solches Heizelement kann zum Beispiel nicht in einen flexiblen Schlauch eingeführt werden, der einen relativ kleinen Durchmesser aufweist.

Aus der DE 3346191 C2 ist ein Schlauch mit eingearbeiteter elektrischer Heiz- und Steuereinrichtung bekannt. Der Schlauch weist in seiner Wandung eine eingearbeitete elektrische Heiz- und Steuereinrichtung, die nach innen und außen mit je einer nachgiebigen Glasfaserschicht abgedeckt ist, auf. Darüber hinaus sind die Heiz- und Steuereinrichtungen in parallel laufender Wendelform angeordnet.

Da die Heiz- und Steuereinrichtung in einer Glasfaserschicht eingebettet sind, ist der beheizbare Schlauch leicht verformbar. Bei einem derartigen Schlauch tritt jedoch das Problem auf, dass die Flexibilität des Schlauchs so begrenzt ist, dass ein solcher Schlauch nur in bestimmten Applikationen anwendbar ist. Das Heizelement kann z.B. nicht in einem flexiblen Schlauch angeordnet werden. Darüber hinaus kann das Heizelement nicht an jede Schlauchart angepasst werden.

EP 0 881 860 A2 beschreibt eine spiralförmige elektrische Heizvorrichtung zum Anbringen an einem Schlauch, die einen flexiblen elektrisch isolierenden Bandstreifen umfasst, wobei der flexible elektrisch isolierende Bandstreifen fest als eine Spirale geformt ist.

Der Erfindung liegt daher die Aufgabe zugrunde, ein Verfahren zum Herstellen eines beheizbaren Schlauchs und einen entsprechenden beheizbaren Schlauch anzugeben, die es ermöglichen, einen beheizbaren Schlauch mit einer beliebigen Form und einem beliebigen Durchmesser herzustellen.

Gemäß der vorliegenden Erfindung wird diese Aufgabe durch eine elektrische Heizvorrichtung mit den Merkmalen des Patentanspruchs 1 und ein entsprechendes Herstellungsverfahren mit den Schritten des Patentanspruchs 12 gelöst.

Vorteilhafte Weiterbildungen der vorliegenden Erfindung sind Gegenstand der Unteransprüche.

Die vorliegende Erfindung basiert auf der Idee, zum Beheizen eines Schlauchs eine separate Heizvorrichtung mit einem an einer flexiblen Folie angebrachten Heizelement und einem daran angeformten Anschlusselement vorzusehen.

Dadurch, dass das mindestens eine Heizelement gemäß der vorliegende Erfindung an einer flexiblen isolierenden Folie angebracht ist, die in den Schlauch einbringbar ist, kann das an der flexiblen Folie angebrachte Heizelement auf einfache Weise in jede Schlauchart eingeführt werden. Durch den unmittelbaren Kontakt der Heizvorrichtung mit dem zu beheizenden Medium ist schließlich eine besonders energiesparende Wärmeübertragung an das Medium möglich.

Darüber hinaus weist das Anschlusselement der elektrischen Heizvorrichtung elektrische Kontakte zum Kontaktieren der elektrischen Anschlüsse des Heizelements auf. So kann eine einfache Stromversorgung des Heizelements durch die elektrischen Kontakte des Anschlusselements gewährleistet werden.

Die elektrischen Kontakte des Anschlusselements können durch die elektrischen Anschlüsse des Heizelements gebildet werden. Die elektrischen Anschlüsse des Heizelements können nämlich direkt in das Anschlusselement eingebracht werden, z.B. durch Einspritzen.

Wenn die erfindungsgemäße elektrische Heizvorrichtung eine weitere flexible isolierende Folie aufweist und das mindestens eine Heizelement zwischen den zwei flexiblen isolierenden Folien eingebettet ist, ist das eingebettete Heizelement von dem zu erwärmenden Medium getrennt. Darüber hinaus, wenn die flexiblen Folien auch isolierende Eigenschaften aufweisen, ist das eingebettete Heizelement von dem zu erwärmenden Medium elektrisch isoliert.

Gemäß einer vorteilhaften Ausführungsform der erfindungsgemäßen elektrischen Heizvorrichtung weist das Heizelement einen Widerstandsdraht, eine Widerstandspaste, ein Widerstand mit positivem Temperaturkoeffizienten, ein so genanntes PTC-Element, oder einen leitenden Kunststoff auf.

Wenn das Heizelement als ein Widerstandsdraht vorgesehen wird, wird der Widerstandsdraht an der flexiblen isolierenden Folie angebracht, sodass eine sehr flexible Heizfolie gebildet wird. Ein dünnes Widerstandsband kann auch zwischen zwei isolierenden Folien einlaminiert werden, so dass eine dieses Widerstandsband aufnehmende flexible Folie gebildet wird.

Hier ist es besonders vorteilhaft, das Heizelement als eine Widerstandspaste vorzusehen, die auf eine isolierende Folie mittels eines Druckverfahrens aufgebracht wird. Die Widerstandspaste besteht vorzugsweise aus einem metallischen Werkstoff, wie beispielsweise Silber. Das Druckverfahren, wie z.B. Siebdruck, ermöglicht, eine Leiterbahn aus Widerstandspaste auf der isolierenden Folie zu bilden. Auf die mit der gedruckten Leiterbahn versehene isolierende Folie wird dann zur Isolation eine weitere Folie auflaminiert. Eine derartige im Siebdruckverfahren hergestellte Heizvorrichtung ist besonders kostengünstig zu fertigen.

Das Siebdruckverfahren eignet sich insbesondere, um eine relativ dicke Schicht von Widerstandspaste auf eine aus hochwertigem Kunststoff bestehende isolierende Folie zu bilden. Durch die Wahl des metallischen Werkstoffs und der Dicke der gedruckten Leiterbahn kann der Widerstandswert der Leiterbahn bestimmt werden, was es ermöglicht, die Heizleistung der Leiterbahn auszuwählen.

Wenn das Heizelement aus einem PTC-Element besteht, werden die an sich bekannten selbstregelnden Eigenschaften der PTC-Elemente ausgeschöpft, um die in dem Heizelement verbrauchte elektrische Leistung und die Temperatur des Heizelements zu regeln.

Wenn das Heizelement aus einem leitenden Kunststoff besteht, kann eine leichte Heizfolie hergestellt werden, da ein leitender Kunststoff für eine bestimmte elektrische Leitfähigkeit ein geringeres Gewicht als ein Metall aufweist. So kann auch eine besonders flexible Folie hergestellt werden.

Wenn man die zwei flexiblen isolierenden Folien aus einem chemikalienbeständigen Isolationsmaterial zum Trennen des Heizelements von dem zu erwärmenden Medium herstellt, kann eine elektrische Isolation des Heizelements von dem Medium gewährleistet werden. Darüber hinaus sorgen solche Folien für den nötigen Schutz gegenüber Umwelteinflüssen, und besonders gegenüber chemischer Substanzen, sowohl gasförmiger als auch flüssiger, die das zu erwärmende Medium bilden.

Versieht man das Anschlusselement mit einem Steckverbinder, in dem die elektrischen Kontakte des Anschlusselements aufgenommen sind, wobei der Steckverbinder und die elektrischen Anschlüsse des Heizelements von dem zu erwärmenden Medium elektrisch isoliert sind, erfüllt das Anschlusselement gemäß der vorliegenden Erfindung zwei technische Funktionen gleichzeitig. Zum einen wird durch das Anschlusselement das zu erwärmende Medium in den Schlauch eingeleitet, und zum zweiten kann ein Strom über die elektrischen Kontakte des Anschlusselements zu dem Heizelement zugeführt werden. Dadurch wird eine kompakte Ausgestaltung der elektrischen Heizvorrichtung erreicht, indem die Funktionen der Strom- und Mediumzufuhr in den Schlauch in einem Element kombiniert werden.

Die elektrischen Kontakte des Anschlusselements, die in dem Steckverbinder aufgenommen sind, können auch durch die elektrischen Anschlüsse des Heizelements gebildet werden, die direkt in das Anschlusselement eingebracht sind.

Dadurch, dass die elektrische Heizvorrichtung sowohl ein gasförmiges als auch ein flüssiges zu erwärmendes Medium aufnehmen kann, können unterschiedliche Medien mit unterschiedlichen Wärmekapazitäten je nach Applikation mit der erfindungsgemäßen Heizvorrichtung erwärmt werden.

Bei der Herstellung eines beheizbaren Schlauchs kommt besonders vorteilhaft zur Geltung, dass das Heizelement an einer flexiblen isolierenden Folie angebracht ist, die in dem beheizbaren Schlauch eingeführt ist. Dadurch kann ein besonders flexibler beheizbarer Schlauch hergestellt werden, da sich die flexible Folie mit dem angebrachten Heizelement sehr leicht an der Innenwand des Schlauchs anschmiegt. Diese einfache Applizierung an dem Schlauch des an der flexiblen isolierenden Folie angebrachten Heizelements sorgt auch gleichzeitig für eine gute Kontaktierung des Heizelements an der Innenwand des Schlauchs. So kann ein guter Wärmetransport gewährleistet werden.

Da der beheizbare Schlauch aus Gummi oder Kunststoff bestehen kann, ein gewebeverstärktes Well- oder Glattrohr sein kann, kann jede Schlauchart bezüglich der Flexibilität und Form mit einer Heizvorrichtung gemäß der vorliegenden Erfindung beheizt werden.

Wenn das an der flexiblen Folie angebrachte Heizelement spiralförmig in den Schlauch eingeführt wird, kann garantiert werden, dass sich das Heizelement an der Innenwand des Schlauchs anschmiegt, was eine gute Kontaktierung und daher einen effizienten Wärmetransport gewährleistet, andererseits aber einen ungehinderten Fluidstrom durch den Schlauch erlaubt.

Vorteilhaft ist es auch, wenn das an der flexiblen isolierenden Folie angebrachte Heizelement beidseitig von dem zu erwärmenden Medium umspült wird. So wird auch ein sehr guter Wärmetransport an das Medium gewährleistet, da die Wärmeaustauschfläche zwischen dem Heizelement und dem Medium größer ist.

Sieht man vor, die elektrischen Anschlüsse des Heizelements an dem Heizelement aufzucrimpen, kann ein fester Kontakt der elektrischen Anschlüsse an dem Heizelement gewährleistet werden.

Darüber hinaus kann, wenn das Anschlusselement und die elektrischen Anschlüsse des Heizelements umspritzt werden, die elektrische Isolation der elektrischen Anschlüsse des Heizelements gegenüber dem zu erwärmenden Medium gewährleistet werden.

Anhand der in den beiliegenden Zeichnungen dargestellten Ausgestaltungen wird die Erfindung im Folgenden näher erläutert. Ähnliche oder korrespondierende Einzelheiten der erfindungsgemäßen elektrischen Heizvorrichtung und des erfindungsgemäßen beheizbaren Schlauchs sind in den Figuren mit den selben Bezugszeichen versehen. Es zeigen:
- **Fig. 1**: eine perspektivische Darstellung einer ersten Ausführungsform der erfindungsgemäßen elektrischen Heizvorrichtung;
- **Fig. 2**: eine perspektivische Darstellung eines erfindungsgemäßen beheizbaren Schlauchs;
- **Fig. 3**: eine vergrößerte Ansicht der elektrischen Anschlüsse der elektrischen Heizvorrichtung aus Fig. 1;
- **Fig. 4**: eine vergrößerte Ansicht des Anschlusselements der erfindungsgemäßen elektrischen Heizvorrichtung;
- **Fig. 5**: eine perspektivische explodierte Darstellung einer zweiten Ausführungsform eines Heizelements der erfindungsgemäßen elektrischen Heizvorrichtung.

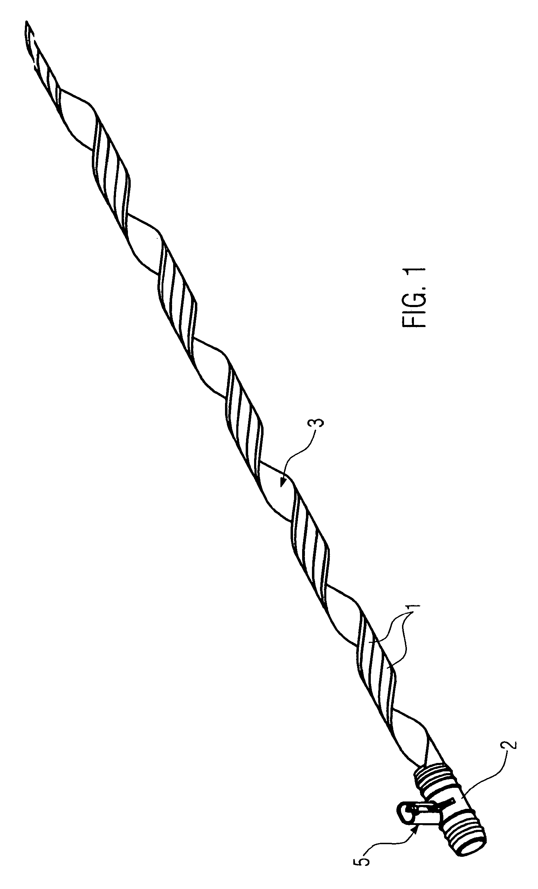

Die erfindungsgemäße Heizvorrichtung weist, wie aus der Fig. 1 ersichtlich, ein Heizelement 1, das in einer flexiblen isolierenden Folie 3 eingebettet ist, auf. Das Heizelement 1 besteht aus einem Widerstandsdraht oder einer Widerstandspaste, die auf die isolierende Folie vorzugsweise mittels eines Siebdruckverfahrens aufgebracht wird und eine Leiterbahn bildet. In beiden Fällen wird eine elektrisch beheizbare Widerstandsbahn gebildet.

Die Widerstandsbahn des Heizelements 1 bildet in der flexiblen Folie 3 zwei elektrische Leitungen, die zu einem elektrischen Kreis geschlossen sind. Die die Widerstandsbahn aufnehmende flexible Folie 3 ist zur Erläuterung der späteren Position im Inneren eines Schlauchs spiralförmig gewunden dargestellt. Das in der flexiblen isolierenden Folie 3 eingebettete Heizelement 1 ist mit einem Anschlusselement 2 verbunden.

Das Heizelement 1 kann auch in der Form eines Heizbandes vorgesehen werden, das mit einer aus Kupfer bestehenden Rückleitung verbunden ist. Das Heizband und die aus Kupfer bestehende Rückleitung bilden daher einen elektrischen Kreis.

Das Heizelement 1 ist auf der Figur 1 in einer isolierenden flexiblen Folie 3 dargestellt. Das Heizelement 1 kann aber auch an einer flexiblen isolierenden Folie befestigt sein. Das Heizelement 1 ist in diesem Fall nicht in der flexiblen Folie 3 eingebettet, wie auf der Figur 1 gezeigt, sondern offen in dem Schlauch geführt. Das Heizelement 1 kann z.B. auf dem Trägermaterial, vorzugsweise auf einer flexiblen Folie, genäht werden. Das Heizelement 1 ist vorzugsweise flexibel, um auf der Folie genäht zu werden, und ist gegen das aufzuwärmende Medium resistent.

Obwohl das Heizelement 1 aus einem Widerstandsdraht oder aus einer Leiterbahn aus Widerstandspaste bestehend beschrieben wird, kann das Heizelement 1 aber auch aus mehreren Heizelementen bestehen, z. B. aus PTC-Bausteinen 7 oder einem leitendem Kunststoff. Darüber hinaus kann die flexible Folie 3 anders als spiralförmig gebogen werden.

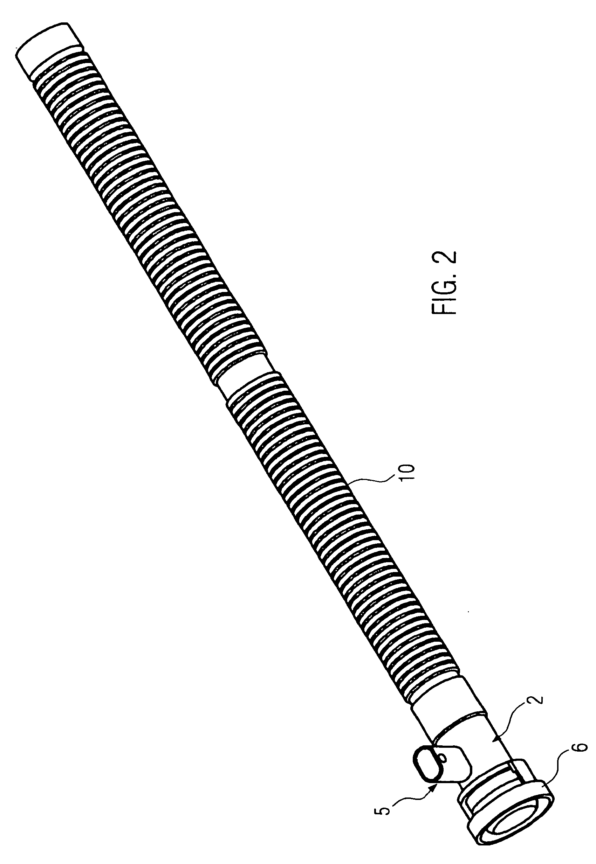

Das mit dem Anschlusselement 2 verbundene Heizelement 1 kann in einen Schlauch 10 eingeführt werden, um einen beheizbaren Schlauch zu bilden, wie aus der Fig. 2 ersichtlich. Dieser beheizbare Schlauch weist hier eine Kupplung 6 zum Verbinden mit äußeren Anschlüssen auf. Dadurch ist das Aufstecken eines zweiten Schlauchs auf das Anschlusselement 2 möglich.

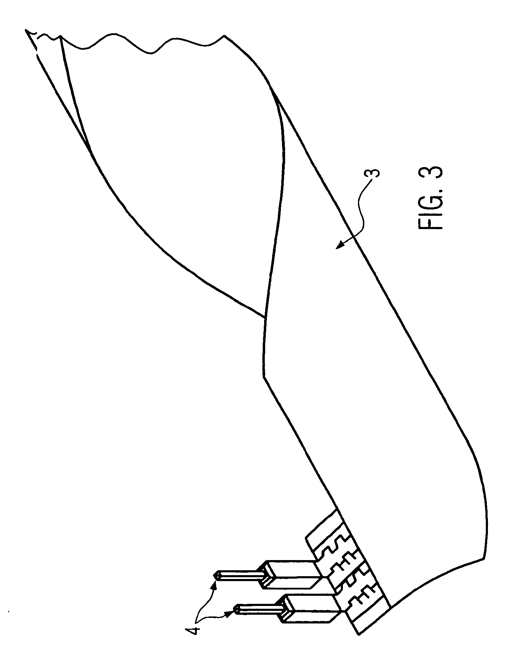

Wie aus der Fig. 3 ersichtlich, weist das mindestens eine Heizelement 1 elektrische Anschlüsse 4, die vorzugsweise am Ende der flexiblen isolierenden Folie 3 angebracht sind, auf. Das Anschlusselement 2 weist elektrische Kontakte auf, die in einem Steckverbinder 5 aufgenommen sind. Diese elektrischen Kontakte sind mit den elektrischen Anschlüssen 4 des mindestens einen Heizelements 1 verbunden oder werden durch die elektrischen Anschlüsse 4 gebildet, wenn diese direkt in das Anschlusselement 2 eingebracht sind.

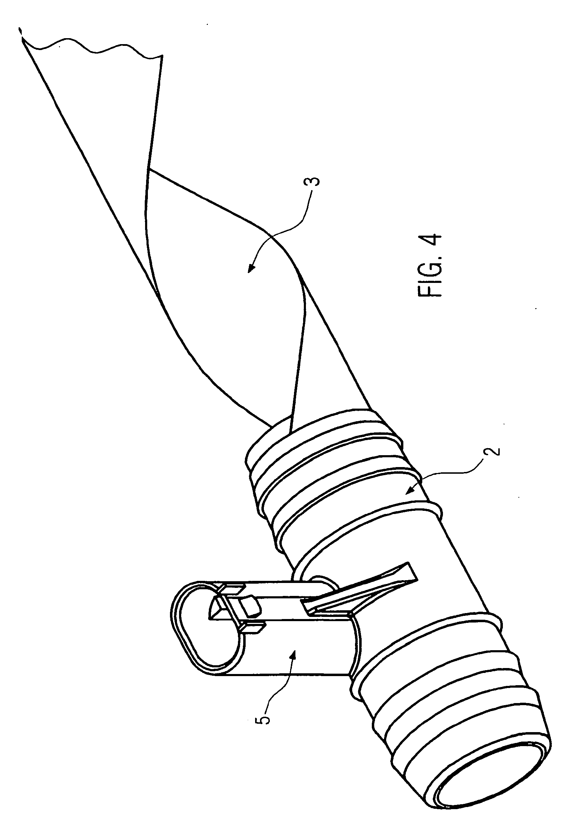

Fig. 4 zeigt eine vergrößerte Ansicht des Anschlusselements 2. Das Anschlusselement 2 besteht aus einem im Wesentlichen zylindrischen Element, aus dem der Steckverbinder 5 im Wesentlichen senkrecht zu der Längsachse des Anschlusselements 2 herausragt. Es wird somit eine T-Struktur gebildet, die mit dem an der flexiblen isolierenden Folie 3 angebrachten Heizelement 1 verbunden ist. Das im Wesentlichen zylindrische Element des Anschlusselements 2 weist Fixierungselemente in der Form von umlaufenden Vorsprüngen mit dreieckförmigem Querschnitt, um seinen Umfang herum auf, die dazu dienen, nach dem Aufstecken eines Schlauchs an das Ende des zylindrischen Elements das Zurückschieben des Schlauchs zu erschweren.

Obwohl das mit dem Steckverbinder 5 versehene Anschlusselement 2 als eine T-Struktur dargestellt wird, sind selbstverständlich andere Ausgestaltungen des Anschlusselements 2 möglich, solange die Trennung der Strom- und Mediumzufuhr gewährleistet ist.

Fig. 1 zeigt eine perspektivische Darstellung der erfindungsgemäßen Heizvorrichtung. Insbesondere zeigt diese Figur eine spiralförmige Darstellung der flexiblen isolierenden Folie 3, die das mindestens eine Heizelement 1 aufnimmt. Durch Biegen der flexiblen Folie 3 wird diese spiralförmige Form der Folie 3 erreicht. Diese Form ist besonders vorteilhaft, um sowohl eine leichte Einführung der Folie 3 als auch eine gute Kontaktierung des Heizelements 1 an der Innenwandung des Schlauchs 10 zu gewährleisten. Andere Ausgestaltungen und Einbauformen der flexiblen Folie 3 sind aber auch möglich, sofern ein guter Wärmetransport zwischen dem Heizelement 1 und dem zu erwärmenden Medium garantiert wird.

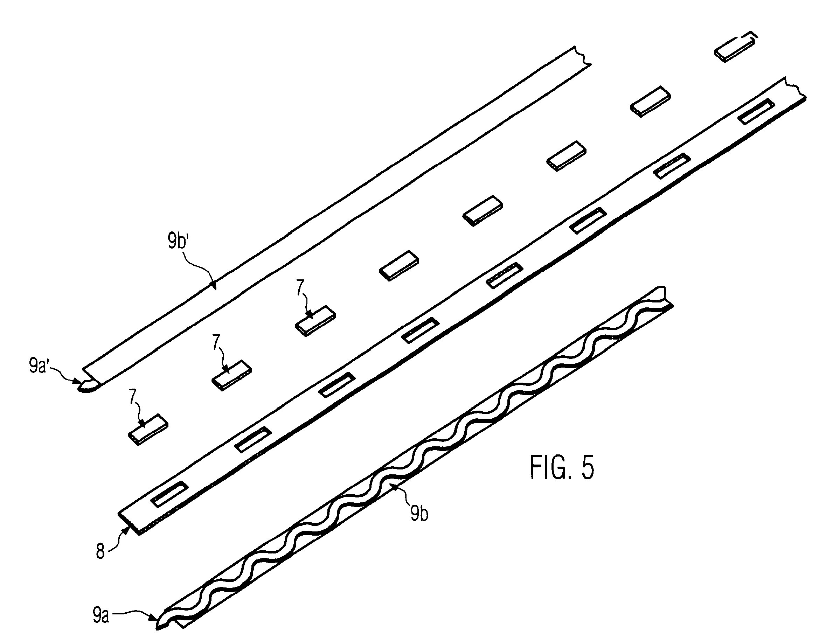

Fig. 5 zeigt eine perspektivische explodierte Darstellung einer zweiten Ausführungsform des Heizelements 1 der erfindungsgemäßen elektrischen Heizvorrichtung. Das Heizelement 1 besteht aus einer Vielzahl von PTC-Bausteinen 7, die in einem Positionierband 8 angeordnet sind. Das Positionierband 8 besteht vorzugsweise aus einem Elastomer, oder einem Thermoplast, wie z.B. PA66, und weist eine Vielzahl von Aussparungen auf. Das Positionierband 8 weist vorzugsweise eine längliche Struktur auf, und die Aussparungen sind entlang der Längsachse des Positionierbands 8 angeordnet. Wie aus der Fig. 5 ersichtlich, sind diese Aussparungen gleichermaßen entlang des Positionierbands 8 verteilt. Um unterschiedliche Wärmezonen zu bilden, ist es aber auch möglich, die PTC-Bausteine mit einer unterschiedlichen Verteilung zu positionieren. Die in den Aussparungen des Positionierbands 8 angeordneten PTC-Bausteine 7 sind miteinander durch Leitfolien 9a und 9'a verbunden. Diese Leitfolien 9a und 9'a sind auf Isolierfolien 9b und 9'b angebracht, die dann in einer zusammengestellten Stellung gegen das mit den PTC-Bausteinen versehene Positionierband 8 appliziert werden.

Wie aus der Fig. 5 ersichtlich, haben die Leitfolien 9a und 9'a eine mäanderförmige Struktur. Eine lineare Ausgestaltung der Leitfolien 9a und 9'a oder andere Konstruktionen sind aber auch möglich. Wenn die Leitfolien mäanderförmig ausgestaltet werden, ist die Flexibilität der mit den PTC-Bausteinen 7 versehenen Heizfolie erhöht. Darüber hinaus werden Leit- und Isofolie als Laminat aufgebaut, d.h. auf die selbstklebende Isofolie wird die Leitfolie aufgeklebt.

Im Folgenden soll die Funktionsweise der einzelnen in den Figuren gezeigten Komponenten erläutert werden.

Die in Fig. 1 gezeigte erfindungsgemäße elektrische Heizvorrichtung wird in einen Schlauch 10 eingeführt, wobei sich das in der flexiblen isolierenden Folie 3 eingebettete Heizelement 1 an der Innenwand des Schlauchs 10 anschmiegt. Die flexible Folie 3 der elektrischen Heizvorrichtung wird in das Anschlusselement 2 eingespritzt, montiert oder extrudiert. Wie aus der Fig. 2 ersichtlich, wird eine Kupplung 6 an den Schlauchverbinder 2 angeschlossen, welche mit einer Leitung verbunden werden kann, die das zu erwärmende Medium in den Schlauch 10 zuführt. Die elektrischen Kontakte des Steckverbinders 5 des Anschlusselements 2, die vorzugsweise durch die elektrischen Anschlüsse 4 des Heizelements 1 gebildet werden, werden mit einer Stromversorgung verbunden, die dazu dient, dem Heizelement 1 elektrischen Strom zum Beheizen zuzuführen.

Wenn die elektrische Heizvorrichtung betätigt wird, wird Strom an das Heizelement 1 geliefert, wodurch das Heizelement 1 erhitzt wird und Wärme an das sich in dem Schlauch 10 befindende zu erwärmende Medium übertragen wird. Durch diese Wärmeübertragung wird das Medium erhitzt. Bei kalten Temperaturen kann also garantiert werden, dass die Temperatur des Mediums über einem minimalen Wert bleibt. Dies bietet den Vorteil, dass in einer kalten Umgebung der Gefrierpunkt des Mediums nicht erreicht wird. Dies ist von besonderem Vorteil z. B. in einem Kraftfahrzeug, um die Vereisung von sich in einer Vielzahl von Schläuchen befindenden Flüssigkeiten, wie z. B. Wasser oder Kühlflüssigkeit, zu vermeiden. Darüber hinaus ermöglicht die elektrische Heizvorrichtung, vereiste Flüssigkeiten in einem Schlauch aufzutauen.

Die elektrische Heizvorrichtung gemäß der zweiten Ausführungsform der vorliegenden Erfindung weist PTC-Bausteine 7 als Heizelement 1 auf. Das so gebildete Heizelement 1 wird wie oben beschrieben in den Schlauch 10 eingeführt, vorzugsweise nachdem die zusammengestellte Konstruktion, die aus den Folien 9a, 9b, 9'a, 9'b, dem Positionierband 8 und den PTC-Bausteinen 7 besteht, gebogen wurde. Vorzugsweise kann diese Struktur in eine spiralförmige Form gebogen werden, was durch die Flexibilität des Laminats ermöglicht wird.

In der zweiten Ausführungsform der erfindungsgemäßen elektrischen Heizvorrichtung erfolgt wie in der ersten Ausführungsform eine sehr effiziente Kontaktierung des Heizelements 1 an der Wandung des Schlauchs 10 aufgrund der gemäß der vorliegenden Erfindung gewählten flexiblen Konstruktion des Heizelements 1, was zu einem freien Innenquerschnitt des Schlauchs führt.

Alternativ kann eine sehr erhöhte Wärmeabgabe an das Medium gewährleistet werden, wenn das Heizelement 1 von beiden Seiten von dem Medium umspült wird, weil dann eine noch größere Wärmeaustauschfläche zwischen dem Heizelement 1 und dem Medium vorliegt.

## Patentansprüche

1. Beheizbarer Schlauch, durch den ein zu erwärmendes Medium fließt oder in dem ein zu erwärmendes Medium steht, umfassend mindestens eine elektrische Heizvorrichtung, wobei die mindestens eine elektrische Heizvorrichtung Folgendes umfasst:
mindestens ein Heizelement (1), das mittels elektrischer Anschlüsse (4) elektrisch kontaktierbar ist,
ein Anschlusselement (2) zum Anschließen des Schlauchs (10) an das Heizelement (1), wobei das Anschlusselement (2) elektrische Kontakte zum Kontaktieren der elektrischen Anschlüsse (4) aufweist,
wobei das mindestens eine Heizelement (1) an einer flexiblen isolierenden Folie (9b) angebracht ist,
**dadurch gekennzeichnet, dass**
die flexible isolierende Folie (9b) im Inneren des Schlauchs (10) spiralförmig gewunden ist.

2. Beheizbarer Schlauch nach Anspruch 1, wobei die mindestens eine elektrische Heizvorrichtung eine weitere flexible isolierende Folie (9'b) aufweist und wobei das mindestens eine Heizelement (1) zwischen den zwei flexiblen isolierenden Folien (9b, 9'b) eingebettet ist.

3. Beheizbarer Schlauch nach einem der Ansprüche 1 oder 2, wobei das Heizelement (1) mindestens einen Widerstandsdraht, eine Leiterbahn aus Widerstandspaste, ein PTC-Element (7) oder einen leitenden Kunststoff aufweist.

4. Beheizbarer Schlauch nach einem der Ansprüche 2 oder 3, wobei die zwei flexiblen isolierenden Folien (9b, 9'b) aus einem chemikalienbeständigen Isolationsmaterial zum Trennen des Heizelements (1) von dem zu erwärmenden Medium hergestellt sind.

5. Beheizbarer Schlauch nach einem der Ansprüche 1 bis 4, wobei das Anschlusselement (2) einen Steckverbinder (5), in dem die elektrischen Kontakte aufgenommen sind, aufweist, wobei der Steckverbinder (2) und die elektrischen Anschlüsse (4) des Heizelements (1) von dem zu erwärmenden Medium elektrisch isoliert sind.

6. Beheizbarer Schlauch nach einem der Ansprüche 1 bis 5, wobei die elektrischen Anschlüsse (4) des Heizelements (1) als die elektrischen Kontakte des Anschlusselements (2) nach außen geführt sind.

7. Beheizbarer Schlauch nach einem der Ansprüche 1 bis 6, wobei das zu erwärmende Medium gasförmig oder flüssig ist.

8. Beheizbarer Schlauch nach einem der Ansprüche 1 bis 7, weiterhin umfassend eine mit dem Anschlusselement (2) verbundene Kupplung (6) zum Kuppeln des Schlauchs (10) mit äußeren Fluidanschlüssen.

9. Beheizbarer Schlauch nach einem der Ansprüche 1 bis 8, wobei der Schlauch (10) aus Gummi oder Kunststoff besteht.

10. Beheizbarer Schlauch nach einem der Ansprüche 1 bis 9, wobei der Schlauch (10) ein gewebeverstärktes Rohr, ein Well- oder Glattrohr ist.

11. Verfahren zum Herstellen eines beheizbaren Schlauchs, durch den ein zu erwärmendes Medium fließt oder in dem ein zu erwärmendes Medium steht, wobei das Verfahren die folgenden Schritte aufweist:
Bilden eines elektrisch kontaktierbaren Heizelements (1) mit elektrischen Anschlüssen (4),
Bilden eines Anschlusselements (2), wobei das Anschlusselement (2) mit elektrischen Kontakten zum Kontaktieren der elektrischen Anschlüsse (4) versehen wird,
Verbinden des Anschlusselements (2) mit dem Heizelement (1),
Anbringen des mindestens einen Heizelements (1) an einer flexiblen isolierenden Folie (9b),
Anschließen des mit dem Heizelment (1) verbundenen Anschlusselements (2) an den Schlauch (10),
**dadurch gekennzeichnet, dass**
die flexible isolierende Folie (9b) vor dem Einbringen in den Schlauch (10) spiralförmig gewunden wird, und
durch das Einbringen der, mit dem Heizelement (1) versehenen, spiralförmig gebogenen flexiblen Folie (9b) in das Innere des Schlauches (10).

12. Verfahren nach Anspruch 11, weiterhin umfassend das Einbetten des mindestens einen Heizelements (1) zwischen der flexiblen isolierenden Folie (9b) und einer weiteren flexiblen isolierenden Folie (9'b).

13. Verfahren nach Anspruch 11 oder 12, wobei die elektrischen Anschlüsse (4) an dem Heizelement (1) aufgecrimpt werden.

14. Verfahren nach einem der Ansprüche 11 bis 13, wobei das Anschlusselement (2) und die elektrischen Anschlüsse (4) des Heizelements (1) umspritzt werden.

15. Verfahren nach einem der Ansprüche 11 bis 14, wobei die elektrischen Anschlüsse (4) des Heizelements (1) als die elektrischen Kontakte des Anschlusselements (2) nach außen geführt sind.

16. Verfahren nach einem der Ansprüche 11 bis 15, wobei die flexible Folie (9b) in den Schlauch (10) eingespritzt, montiert oder extrudiert wird.

17. Verfahren nach einem der Ansprüche 11 bis 16, wobei der Schlauch (10) gespritzt, extrudiert oder geformt wird.

## Claims

1. Heatable hose, through which a medium to be heated up flows or in which a medium to be heated up stagnates, said heatable hose comprising at least one electrical heating device, wherein the at least one electrical heating device comprises the following:
at least one heating element (1), which can be connected electrically using electrical terminals (4),
a connecting element (2) for connecting the hose (10) to the heating element (1), wherein the connecting element (2) comprises electrical contacts for contacting the electrical terminals (4),
wherein the at least one heating element (1) is arranged on a flexible insulating foil (9b),
**characterized in that**
the flexible insulating foil (9b) is wound in the interior of the hose (10) in the form of a spiral.

2. Heatable hose according to claim 1, wherein the at least one electrical heating device comprises a further flexible insulating foil (9'b) and wherein the at least one heating element (1) is embedded between the two flexible insulating foils (9b, 9'b).

3. Heatable hose according to one of claims 1 or 2, wherein the heating element (1) comprises at least one resistive wire, a conductive path made of a resistive paste, one PTC element (7) or one conductive plastic.

4. Heatable hose according to one of claims 2 or 3, wherein the two flexible insulating foils (9b, 9'b) are produced out of a chemically resistant insulating material for separating the heating element (1) from the medium to be heated up.

5. Heatable hose according to one of claims 1 to 4, wherein the connecting element (2) comprises a plug-type connector (5), in which the electrical contacts are received, wherein the plug-type connector (2) and the electrical terminals (4) of the heating element (1) are electrically isolated from the medium to be heated up.

6. Heatable hose according to one of claims 1 to 5, wherein the electrical terminals (4) of the heating element (1) are led to the outside as the electrical contacts of the connecting element (2).

7. Heatable hose according to one of claims 1 to 6, wherein the medium to be heated up is gaseous or liquid.

8. Heatable hose according to one of claims 1 to 7, further comprising a coupler (6) for coupling the hose (10) with outer fluid terminals, said coupler (6) being connected with the connecting element (2).

9. Heatable hose according to one of claims 1 to 8, wherein the hose (10) is made of rubber or plastic.

10. Heatable hose according to one of claims 1 to 9, wherein the hose (10) is a fabric-reinforced pipe, a corrugated pipe or a smooth-bore pipe.

11. Method for manufacturing a heatable hose; through which a medium to be heated up flows or in which a medium to be heated up stagnates, wherein the method comprises the following steps:
forming an electrically contactable heating element (1) with electrical terminals (4),
forming a connecting element (2), wherein the connecting element (2) is provided with electrical contacts for contacting the electrical terminals (4),
connecting the connecting element (2) to the heating element (1),
arranging the at least one heating element (1) on a flexible insulating foil (9b),
connecting the connecting element (2), which is connected to the heating element (1), to the hose (10),
**characterized in that**
the flexible insulating foil (9b) is wound up into a spiral form before being introduced into the hose (10), and
by the introduction into the interior of the hose (10) of the flexible foil (9b), which is provided with the heating element (1) and is curved in the form of a spiral.

12. Method according to claim 11, further comprising embedding the at least one heating element (1) between the flexible insulating foil (9b) and a further flexible insulating foil (9'b).

13. Method according to claim 11 or 12, wherein the electrical terminals (4) are crimped on the heating element (1).

14. Method according to one of claims 11 to 13, wherein the connecting element (2) and the electrical terminals (4) of the heating element (1) are injection-molded.

15. Method according to one of claims 11 to 14, wherein the electrical terminals (4) of the heating element (1) are led to the outside as the electrical contacts of the connecting element (2).

16. Method according to one of claims 11 to 15, wherein the flexible foil (9b) is injected, mounted or extruded into the hose (10).

17. Method according to one of claims 11 to 16, wherein the hose (10) is injection-molded, extruded or formed.

## Revendications

1. Tuyau chauffant, à travers lequel un milieu devant être chauffé coule ou dans lequel un milieu devant être chauffé stagne, ledit tuyau chauffant comprenant au moins un dispositif électrique de chauffage, dans lequel l'au moins un dispositif électrique de chauffage comprend les éléments suivants:
au moins un élément chauffant (1), qui peut être connecté électriquement au moyen de terminaux électriques (4),
un élément de connexion (2) destiné à connecter le tuyau (10) à l'élément chauffant (1), dans lequel l'élément de connexion (2) comprend des contacts électriques destinés à établir un contact avec les terminaux électriques (4),
dans lequel l'au moins un élément chauffant (1) est disposé sous un film flexible isolant (9b),
**caractérisé en ce que**
le film flexible isolant (9b) est enroulé à l'intérieur du tube (10) sous la forme d'une spirale.

2. Tuyau chauffant selon la revendication 1, dans lequel l'au moins un dispositif électrique de chauffage comprend un film isolant flexible supplémentaire (9'b), et dans lequel l'au moins un élément chauffant (1) est compris entre les deux films flexibles isolants (9b, 9'b).

3. Tuyau chauffant selon l'une des revendications 1 ou 2, dans lequel l'élément chauffant (1) comprend au moins un fil résistif, une piste conductrice faite de pâte résistive, un élément PTC (7) ou un plastique conducteur.

4. Tuyau chauffant selon l'une des revendications 2 ou 3, dans lequel les deux films flexibles isolants (9b, 9'b) sont fabriqués en un matériau d'isolation résistant chimiquement destiné à séparer l'élément chauffant (1) du milieu devant être chauffé.

5. Tuyau chauffant selon l'une des revendications 1 à 4, dans lequel l'élément de connexion (2) comprend un connecteur enfichable (5), dans lequel les contacts électriques sont reçus, dans lequel le connecteur enfichable (2) et les terminaux électriques (4) de l'élément chauffant (1) sont isolés électriquement du milieu devant être chauffé.

6. Tuyau chauffant selon l'une des revendications 1 à 5, dans lequel les terminaux électriques (4) de l'élément chauffant (1) sont conduits vers l'extérieur en tant que contacts électriques de l'élément de connexion (2).

7. Tuyau chauffant selon l'une des revendications 1 à 6, dans lequel le milieu devant être chauffé est gazeux ou liquide.

8. Tuyau chauffant selon l'une des revendications 1 à 7, comprenant en outre un élément de couplage (6) connecté à l'élément de connexion (2) et destiné à coupler le tuyau (10) à des terminaux fluide externes.

9. Tuyau chauffant selon l'une des revendications 1 à 8, dans lequel le tuyau (10) est formé en caoutchouc ou plastique.

10. Tuyau chauffant selon l'une des revendications 1 à 9, dans lequel le tuyau (10) est un tube de structure renforcée, un tube à surface ondulée ou un tube à surface plate.

11. Procédé de fabrication d'un tuyau chauffant, à travers lequel un milieu devant être chauffé coule ou dans lequel un milieu devant être chauffé stagne, le procédé comprenant les étapes suivantes, qui consistent à :
former un élément chauffant (1), qui peut être connecté électriquement, avec des terminaux électriques (4),
former un élément de connexion (2), l'élément de connexion (2) étant muni de contacts électriques destinés à établir un contact avec les terminaux électriques (4),
connecter l'élément de connexion (2) avec l'élément chauffant (1),
disposer l'au moins un élément chauffant (1) sur un film flexible isolant (9b),
connecter l'élément de connexion (2), qui est connecté avec l'élément chauffant (1), au tuyau (10),
**caractérisé en ce que**
le film flexible isolant (9b) est enroulé sous forme de spirale avant d'être introduit dans le tuyau (10), et
par l'introduction du film flexible (9b) plié sous forme de spirale et muni de l'élément chauffant (1) à l'intérieur du tuyau (10).

12. Procédé selon la revendication 11, comprenant en outre l'encastrement du au moins un élément chauffant (1) entre le film flexible isolant (9b) et un film flexible isolant (9'b) supplémentaire.

13. Procédé selon la revendication 11 ou 12, dans lequel les terminaux électriques (4) sont accrochés à l'élément chauffant (1).

14. Procédé selon l'une des revendications 11 à 13, dans lequel l'élément de connexion (2) et les terminaux électriques (4) de l'élément chauffant (1) sont formés par moulage par injection.

15. Procédé selon l'une des revendications 11 à 14, dans lequel les terminaux électriques (4) de l'élément chauffant (1) sont guidés vers l'extérieur en tant que contacts électriques de l'élément de connexion (2).

16. Procédé selon l'une des revendications 11 à 15, dans lequel le film flexible (9b) est moulé par injection, monté ou extrudé dans le tuyau (10).

17. Procédé selon l'une des revendications 11 à 16, dans lequel le tuyau (10) est obtenu par moulage par injection, extrudé ou formé.
